# EUROPÄISCHE PATENTANMELDUNG

(11) **EP 4 803 284 A1**
(43) Veröffentlichungstag der Anmeldung: **09.09.2026**
(21) Anmeldenummer: 26161919.1
(22) Anmeldetag: 03.03.2026
(51) Int. Cl.: B29C 45/16, B29B 7/72, B29B 7/74, B29B 7/76, B29C 31/04, B29C 39/24, B29C 45/46, B29C 45/53, B29C 45/58, B29C 67/24

(54) **EINRICHTUNG ZUM EINBRINGEN EINES KUNSTSTOFFMATERIALGEMISCHS IN EINE FORMWERKZEUGKAVITÄT EINES FORMWERKZEUGS**

(30) Priorität: 07.03.2025 DE 102025108673
(71) Anmelder: Siegfried Hofmann GmbH, 96215 Lichtenfels (DE)
(72) Erfinder: Weißmann, Roland, 96215 Lichtenfels (DE); Hofmann, Stefan, 96215 Lichtenfels (DE)
(74) Vertreter: Hafner & Kohl PartmbB

(57) **Zusammenfassung**

Einrichtung (10) zum Einbringen eines, insbesondere im Zusammenhang mit einem Flutprozess, in eine Formwerkzeugkavität eines Formwerkzeugs einbringbaren bzw. einzubringenden mehrkomponentigen Kunststoffmaterialgemischs in eine Formwerkzeugkavität eines Formwerkzeugs, wobei die Einrichtung umfasst:

wenigstens eine Zuführeinrichtung (11), welche eine sich zwischen einer Bereitstellungseinrichtung zur Bereitstellung eines, insbesondere im Zusammenhang mit einem Flutprozess, in eine Formwerkzeugkavität eines Formwerkzeugs einbringbaren bzw. einzubringenden mehrkomponentigen Kunststoffmaterialgemischs und einer Formwerkzeugkavität eines Formwerkzeugs, in welches das über die Bereitstellungseinrichtung bereitstellbare bzw. bereitgestellte Kunststoffmaterialgemisch einzubringen ist, erstreckende Zuführstrecke ZS definiert;

wenigstens eine Aufnahmekammer (12), welche wenigstens einen Aufnahmeraum AR zur Aufnahme von einem, insbesondere im Zusammenhang mit einem Flutprozess, in eine Formwerkzeugkavität eines Formwerkzeugs einbringbaren bzw. einzubringenden mehrkomponentigen Kunststoffmaterialgemisch umfasst;

wenigstens eine der wenigstens einen Aufnahmekammer zugeordnete Stelleinrichtung (13), welche wenigstens ein in wenigstens einem Bewegungsfreiheitsgrad bewegbar gelagertes Stellelement 13.1 umfasst, welches eingerichtet ist, durch eine Bewegung in dem wenigstens einen Bewegungsfreiheitsgrad in dem wenigstens einen Aufnahmeraum aufgenommenes Kunststoffmaterialgemisch aus dem wenigstens einen Aufnahmeraum in die oder in Richtung der Formwerkzeugkavität des Formwerkzeugs, in welches das Kunststoffmaterialgemisch einzubringen ist, zu bewegen.

## Beschreibung

Die Erfindung betrifft eine Einrichtung zum Einbringen eines, insbesondere im Zusammenhang mit einem Flutprozess, in eine Formwerkzeugkavität eines Formwerkzeugs einbringbaren bzw. einzubringenden mehrkomponentigen Kunststoffmaterialgemischs in eine Formwerkzeugkavität eines Formwerkzeugs.

Entsprechende Einrichtungen zum Einbringen eines, insbesondere im Rahmen eines bzw. im Zusammenhang mit einem Flutprozess, in eine Formwerkzeugkavität eines Formwerkzeugs einbringbaren bzw. einzubringenden mehrkomponentigen Kunststoffmaterialgemischs in eine Formwerkzeugkavität eines Formwerkzeugs sind aus dem Stand der Technik dem Grunde nach bekannt.

Entsprechende Einrichtungen sind typischerweise so konfiguriert, dass diese ein über eine Bereitstellungseinrichtung, d. h. z. B. eine Mischkopfeinrichtung, bereitgestelltes mehrkomponentiges Kunststoffmaterialgemisch - hierbei kann es sich insbesondere um ein Gemisch aus den Komponenten eines Polyurethans, mithin um Polyole und Polyisocyanate, handeln - im Rahmen bzw. im Zusammenhang mit einem Flutprozess in die Formwerkzeugkavität eines Formwerkzeugs einbringen können.

Bekannte Einrichtungen sind bis dato typischerweise als vergleichsweise einfach ausgestaltete Kanalstruktur ausgebildet, welche sich zwischen dem Ausgang einer entsprechenden Bereitstellungseinrichtung und der Formwerkzeugkavität des entsprechenden Formwerkzeugs, in welche das mehrkomponentige Kunststoffmaterialgemisch einzubringen ist, erstreckt.

Die Menge eines in die Formwerkzeugkavität des jeweiligen Formwerkzeugs einzubringenden bzw. eingebrachten Kunststoffmaterialgemischs wird bis dato typischerweise über eine dem Ausgang der Bereitstellungseinrichtung zugehörige Ventileinrichtung dosiert bzw. gesteuert; weitere Dosier- bzw. Steuerungsmöglichkeiten der Menge des in die Formwerkzeugkavität des Formwerkzeugs einzubringenden Kunststoffmaterialgemischs sind nicht vorgesehen.

Insbesondere verfügen bekannte Einrichtungen über keine Dosier- bzw. Steuerungsmöglichkeit einer Menge eines in eine Formwerkzeugkavität eines Formwerkzeugs einzubringenden Kunststoffmaterialgemischs, was einen verbesserungswürdigen Zustand darstellt, als eine zusätzliche solche Dosier- bzw. Steuerungsmöglichkeit, insbesondere im Zusammenhang mit einem Flutprozess, ein noch exakteres Einbringen einer Menge eines Kunststoffmaterialgemischs in eine Formwerkzeugkavität eines Formwerkzeugs eröffnet.

Hiervon ausgehend liegt der vorliegenden Erfindung die Aufgabe zugrunde, eine, insbesondere im Hinblick auf eine Dosier- bzw. Steuerungsmöglichkeit der Menge eines, insbesondere im Rahmen eines bzw. im Zusammenhang mit einem Flutprozess, in eine Formwerkzeugkavität eines Formwerkzeugs einzubringenden Kunststoffmaterialgemischs, verbesserte Einrichtung zum Einbringen eines in eine Formwerkzeugkavität eines Formwerkzeugs einbringbaren bzw. einzubringenden mehrkomponentigen Kunststoffmaterialgemischs in eine Formwerkzeugkavität eines Formwerkzeugs anzugeben.

Die Aufgabe wird insbesondere durch eine Einrichtung zum Einbringen eines, insbesondere im Rahmen eines bzw. im Zusammenhang mit einem Flutprozess, in eine Formwerkzeugkavität eines Formwerkzeugs einbringbaren bzw. einzubringenden mehrkomponentigen Kunststoffmaterialgemischs in eine Formwerkzeugkavität eines Formwerkzeugs gemäß dem vorliegenden unabhängigen Anspruch 1 gelöst. Die hierzu abhängigen Ansprüche betreffen mögliche Ausführungsformen der Einrichtung.

Ein erster Aspekt der Erfindung betrifft eine Einrichtung zum Einbringen eines, insbesondere im Rahmen eines Flutprozesses bzw. im Zusammenhang mit einem Flutprozess, in eine Formwerkzeugkavität eines Formwerkzeugs einbringbaren bzw. einzubringenden mehrkomponentigen Kunststoffmaterialgemischs in eine Formwerkzeugkavität eines Formwerkzeugs.

Die Einrichtung ist sonach im Allgemeinen zum Einbringen eines, insbesondere im Rahmen eines Flutprozesses bzw. Zusammenhang mit einem Flutprozess, in eine Formwerkzeugkavität eines Formwerkzeugs einbringbaren bzw. einzubringenden mehrkomponentigen Kunststoffmaterialgemischs in eine Formwerkzeugkavität eines Formwerkzeugs eingerichtet.

Bei einem entsprechenden, im Weiteren kurz als "Kunststoffmaterialgemisch" bezeichneten mehrkomponentigen Kunststoffmaterialgemisch handelt es sich sonach typischerweise um ein reaktives Kunststoffmaterialgemisch, welches wenigstens zwei reaktive Materialkomponenten enthält. Ein konkretes, jedoch nicht einschränkendes Beispiel eines entsprechenden Kunststoffmaterialgemischs ist ein Gemisch, welches die Materialkomponenten eines Polyurethans, mithin Polyole und Polyisocyanate, enthält. Grundsätzlich kommt jedwedes Kunststoffmaterialgemisch in Betracht, welches im Rahmen eines Flutprozesses verarbeitbar bzw. zu verarbeiten und damit insbesondere in eine Formwerkzeugkavität eines Formwerkzeugs einbringbar bzw. einzubringen ist. Ein entsprechendes Kunststoffmaterialgemisch ist fließfähig und weist typischerweise eine vergleichsweise niedrige Viskosität auf, sodass es im Rahmen von Flutprozessen bzw. -vorgängen verarbeitbar ist, etwa um eine oder mehrere Oberflächen eines Kunststoffbauteils zu überfluten und so ein Kunststoffbauteil mit besonderen Oberflächeneigenschaften herzustellen.

Die Einrichtung kann daher einen Bestandteil einer Fluteinrichtung einer übergeordneten Vorrichtung ur Herstellung eines Kunststoffbauteils, d. h. eines zumindest abschnittsweise durch ein flutbares mehrkomponentiges Kunststoffmaterialgemisch hergestellten Kunststoffbauteils bilden, welche zur Durchführung von Flutprozessen bzw. -vorgängen eingerichtet ist. Eine entsprechende Vorrichtung kann neben der Einrichtung weitere Bestandteile, wie beispielsweise eine, z. B. durch eine Mischkopfeinrichtung gebildete oder einen solchen umfassende Bereitstellungseinrichtung zum Bereitstellen eines entsprechenden Kunststoffmaterialgemischs, ein der Bereitstellungseinrichtung zugeordnetes erstes Reservoir bzw. im Allgemeinen einen ersten Behälter zum Bereitstellen einer ersten Komponente eines entsprechenden Kunststoffmaterialgemischs, welchem gegebenenfalls eine Fördereinrichtung, etwa in Form einer Pumpeneinrichtung, zum Fördern der ersten Komponente des mehrkomponentigen Kunststoffmaterialgemischs, zugeordnet ist, wenigstens ein der Bereitstellungseinrichtung zugeordnetes weiteres Reservoir bzw. im Allgemeinen wenigstens einen weiteren Behälter zum Bereitstellen einer weiteren Komponente eines entsprechenden Kunststoffmaterialgemischs, welchem gegebenenfalls eine Fördereinrichtung, etwa in Form einer Pumpeneinrichtung, zum Fördern der weiteren Komponente des mehrkomponentigen Kunststoffmaterialgemischs, zugeordnet ist, sowie wenigstens ein wenigstens eine Formwerkzeugkavität aufweisendes ein- oder mehrteiliges Formwerkzeug umfassen. Die wenigstens eine Formwerkzeugkavität des wenigstens einen Formwerkzeugs kann so ausgeführt, d. h. insbesondere dimensioniert, sein, um im Rahmen eines Flutprozesses ein Kunststoffbauteil mit wenigstens einer zumindest abschnittsweise überfluteten Oberfläche auszubilden. Die wenigstens eine Formwerkzeugkavität des wenigstens einen Formwerkzeugs kann sonach so ausgeführt, d. h. insbesondere dimensioniert, sein, dass sich in dieser ein, gegebenenfalls auch als Trägerbauteil zu erachtendes bzw. zu bezeichnendes, Kunststoffbauteil ausbilden oder anordnen lässt und sich wenigstens eine Oberfläche des Kunststoffbauteils zumindest abschnittsweise, gegebenenfalls vollständig, mit dem Kunststoffmaterialgemisch überfluten lässt. Die wenigstens eine Formwerkzeugkavität kann insofern auch als Hauptkavität des wenigstens einen Formwerkzeugs erachtet bzw. bezeichnet werden.

Die Einrichtung umfasst insbesondere die im Weiteren näher beschriebenen Bestandteile:
Die Einrichtung umfasst wenigstens eine Zuführeinrichtung. Die wenigstens eine Zuführeinrichtung kann wenigstens eine Zuführstrecke definieren. Die wenigstens eine Zuführstrecke kann durch ein oder mehrere Wandungen der Zuführeinrichtung gebildet sein. Die wenigstens eine Zuführstrecke kann wenigstens eine, z. B. geradlinig oder gebogen verlaufende, Zuführachse aufweisen. Die wenigstens eine Zuführstrecke kann sich zwischen wenigstens einer Bereitstellungseinrichtung zur Bereitstellung eines, insbesondere im Zusammenhang mit einem Flutprozess, in eine Formwerkzeugkavität eines Formwerkzeugs einbringbaren bzw. einzubringenden mehrkomponentigen Kunststoffmaterialgemischs und einer Formwerkzeugkavität eines Formwerkzeugs, in welches das über die Bereitstellungseinrichtung bereitstellbare bzw. bereitgestellte Kunststoffmaterialgemisch einzubringen ist, erstrecken.

Die wenigstens eine Zuführstrecke kann durch wenigstens einen sich, insbesondere plattenartigen bzw. -förmigen, Zuführabschnitt gebildet sein oder einen solchen umfassen. Die wenigstens eine Zuführstrecke kann sonach eine Oberfläche bilden, auf bzw. entlang welcher das Kunststoffmaterialgemisch in Richtung der Formwerkzeugkavität des wenigstens einen Formwerkzeugs fließen kann. Die wenigstens eine Zuführstrecke kann sonach über einen ersten Zuführstreckenabschnitt und wenigstens einen zweiten Zuführstreckenabschnitt verfügen, welche die erwähnte Zuführachse bilden bzw. welche sich entlang der Zuführachse erstrecken. Der erste Zuführstreckenabschnitt kann durch ein oder mehrere erste Wandungen der Zuführeinrichtung gebildet sein. Der wenigstens eine zweite Zuführstreckenabschnitt kann durch ein oder mehrere zweite Wandungen der Zuführeinrichtung gebildet sein. Der erste Zuführstreckenabschnitt kann der wenigstens einen Bereitstellungseinrichtung, insbesondere einem Ausgang der wenigstens einen Bereitstellungseinrichtung zugeordnet sein. Der wenigstens eine zweite Zuführstreckenabschnitt kann dem wenigstens einen Formwerkzeug, in dessen Formwerkzeugkavität das Kunststoffmaterialgemisch einzubringen ist, zugeordnet sein. Der wenigstens eine erste Zuführstreckenabschnitt kann im Bereich eines ersten freien Endes der wenigstens einen Zuführstrecke angeordnet oder ausgebildet sein oder ein erstes freies Ende der wenigstens einen Zuführstrecke bilden. Der wenigstens eine zweite Zuführstreckenabschnitt kann im Bereich eines zweiten freien Endes der wenigstens einen Zuführstrecke angeordnet oder ausgebildet sein oder ein zweites freies Ende der wenigstens einen Zuführstrecke bilden. Der wenigstens eine zweite Zuführstreckenabschnitt kann, insbesondere direkt, an wenigstens eine Schnittstelle, wie z. B. einen Eingang bzw. eine Eingangsöffnung, des wenigstens einen Formwerkzeugs ankoppeln bzw. in eine(n) solche(n) übergehen, über welche(n) das in die Formwerkzeugkavität des wenigstens einen Formwerkzeugs einzubringende Kunststoffmaterialgemisch in die Formwerkzeugkavität des wenigstens einen Formwerkzeugs einbringbar ist, um dort im Rahmen eines Flutprozesses ein Kunststoffbauteil mit wenigstens einer zumindest abschnittsweise überfluteten Oberfläche auszubilden.

Wie erwähnt, kann es sich bei einer entsprechenden Bereitstellungseinrichtung z. B. um eine Mischkopfeinrichtung handeln, welcher ein entsprechendes Kunststoffmaterialgemisch über wenigstens einen Ausgang bereitstellt. Dem wenigstens einen Ausgang kann wenigstens eine Ventileinrichtung zugeordnet bzw. zugehörig sein, welche zum Dosieren bzw. Steuern einer bestimmten Menge des über den wenigstens einen Ausgang aus der Bereitstellungseinrichtung an bzw. auf die wenigstens eine Zuführstrecke auszugebenden Kunststoffmaterialgemisch eingerichtet ist.

Die Einrichtung umfasst weiterhin wenigstens eine Aufnahmekammer. Die wenigstens eine Aufnahmekammer umfasst wenigstens einen Aufnahmeraum zur Aufnahme von einem, insbesondere im Zusammenhang mit einem Flutprozess, in eine Formwerkzeugkavität eines Formwerkzeugs einbringbaren bzw. einzubringenden Kunststoffmaterialgemisch. Der wenigstens eine Aufnahmeraum kann durch ein oder mehrere dritte Wandungen der Zuführeinrichtung gebildet sein. Der wenigstens eine Aufnahmeraum definiert typischerweise ein definiertes Raumvolumen und ist sonach zur Aufnahme einer definierten Menge an in die Formwerkzeugkavität des wenigstens einen Formwerkzeugs einbringbarem bzw. einzubringendem Kunststoffmaterialgemisch eingerichtet. Der wenigstens eine Aufnahmeraum dient insbesondere dazu, eine bestimmte Menge eines entsprechenden Kunststoffmaterialgemischs, etwa im Hinblick auf ein mit dem Kunststoffmaterialgemisch zu füllendes Volumen einer Formwerkzeugkavität eines Formwerkzeugs, vorzudosieren. Die wenigstens eine Aufnahmekammer kann insofern auch als Dosierkammer, der wenigstens eine Aufnahmeraum insofern auch als Dosierraum bezeichnet bzw. erachtet werden. Der wenigstens eine Aufnahmeraum kann grundsätzlich auch dazu dienen, die jeweiligen Komponenten eines in diesem aufgenommenen Kunststoffmaterialgemischs nochmals zu vermischen.

Die wenigstens eine Aufnahmekammer ist typischerweise zwischen dem ersten Zuführstreckenabschnitt und dem wenigstens einen zweiten Zuführstreckenabschnitt angeordnet oder ausgebildet; insbesondere derart, dass das Kunststoffmaterialgemisch bei einem Fließen ausgehend von dem wenigstens einen ersten Zuführstreckenabschnitt in Richtung des wenigstens einen zweiten Zuführstreckenabschnitts die wenigstens eine Aufnahmekammer passiert, sodass die wenigstens eine Aufnahmekammer mit dem Kunststoffmaterialgemisch gefüllt wird bzw. werden kann, bevor das Kunststoffmaterialgemisch in die Formwerkzeugkavität des wenigstens einen Formwerkzeugs einbringbar bzw. eingebracht ist. Der wenigstens eine Zuführabschnitt der Zuführstrecke kann sich sonach mit einem ersten Bereich in Richtung einer Öffnung der wenigstens einen Aufnahmekammer erstrecken bzw. in die Öffnung der wenigstens einen Aufnahmekammer münden, und sich mit einem zweiten Bereich ausgehend von der Öffnung der wenigstens einen Aufnahmekammer in Richtung der Formwerkzeugkavität des wenigstens einen Formwerkzeugs erstrecken.

Wie sich im Weiteren ergibt, kann die wenigstens eine Aufnahmekammer auch als Dosierkammer erachtet bzw. bezeichnet werden, da aus dieser eine definierte Menge an in die Formwerkzeugkavität des wenigstens einen Formwerkzeugs einbringbarem bzw. einzubringendem Kunststoffmaterialgemisch dosiert werden kann.

Die wenigstens eine Aufnahmekammer kann sonach einen ersten Bestandteil einer in die Einrichtung integrierten Dosiereinrichtung darstellen, welche zum Dosieren einer definierten Menge an in die Formwerkzeugkavität des wenigstens einen Formwerkzeugs einbringbarem bzw. einzubringendem Kunststoffmaterialgemisch eingerichtet ist.

Die Einrichtung umfasst weiterhin wenigstens eine der wenigstens einen Aufnahmekammer zugeordnete Stelleinrichtung. Die wenigstens eine Stelleinrichtung umfasst wenigstens ein in wenigstens einem Bewegungsfreiheitsgrad bewegbar gelagertes Stellelement. Das wenigstens eine Stellelement ist eingerichtet, durch eine Bewegung in dem wenigstens einen Bewegungsfreiheitsgrad in dem wenigstens einen Aufnahmeraum aufgenommenes Kunststoffmaterialgemisch, d. h. insbesondere eine definierte Menge an in dem wenigstens einen Aufnahmeraum aufgenommenem Kunststoffmaterialgemisch, aus dem wenigstens einen Aufnahmeraum in die oder in Richtung der Formwerkzeugkavität des wenigstens einen Formwerkzeugs, in welches das Kunststoffmaterialgemisch einzubringen ist, zu bewegen. Das wenigstens eine Stellelement ist insbesondere eingerichtet, durch eine Bewegung in dem wenigstens einen Bewegungsfreiheitsgrad in dem wenigstens einen Aufnahmeraum aufgenommenes Kunststoffmaterialgemisch aus dem wenigstens einen Aufnahmeraum auf den wenigstens einen zweiten Zuführstreckenabschnitt aufzubringen, über welchen das Kunststoffmaterialgemisch in die oder in Richtung der Formwerkzeugkavität des wenigstens einen Formwerkzeugs, in welches das Kunststoffmaterialgemisch einzubringen ist, bewegbar ist.

Das wenigstens eine Stellelement kann einen den wenigstens einen Aufnahmeraum, insbesondere bodenseitig, definierenden bzw. begrenzenden Wandungsabschnitt aufweisen. Das wenigstens eine Stellelement kann z. B. als Stößel ausgebildet sein oder einen solchen umfassen. Der wenigstens eine Bewegungsfreiheitsgrad kann ein translatorischer und/oder rotatorischer Bewegungsfreiheitsgrad sein, welcher eine Bewegung des wenigstens einen Stellelements in Richtung einer sich durch den wenigstens einen Aufnahmeraum erstreckenden Bewegungsachse, insbesondere einer Zentralachse des wenigstens einen Aufnahmeraums, ermöglicht. Die Bewegungsachse kann winklig, insbesondere stumpf-, recht- oder spitzwinklig, relativ zu der Zuführachse ausgerichtet sein. Insbesondere kann das wenigstens eine Stellelement zwischen wenigstens einer, gegebenenfalls auch als eingefahrene Ausrichtung und/oder Position bezeichenbaren, ersten Ausrichtung und/oder Position, welche mit einem ersten Aufnahmevolumen des wenigstens einen Aufnahmeraums korreliert, und wenigstens einer, gegebenenfalls auch als ausgefahrene Ausrichtung und/oder Position bezeichenbaren, zweiten Ausrichtung und/oder Position, welche mit einem von dem ersten Aufnahmevolumen verschiedenen, d. h. insbesondere kleineren, zweiten Aufnahmevolumen des wenigstens einen Aufnahmeraums korreliert, bewegbar sein.

Die wenigstens eine Stelleinrichtung kann sonach einen zweiten Bestandteil der in die Einrichtung integrierten Dosiereinrichtung darstellen, welche zum Dosieren einer definierten Menge an in die Formwerkzeugkavität des wenigstens einen Formwerkzeugs einbringbarem bzw. einzubringendem Kunststoffmaterialgemisch eingerichtet ist.

Die Einrichtung ermöglicht sonach, insbesondere aufgrund der beschriebenen in diese integrierbaren bzw. integrierten Dosiereinrichtung, welche zum Dosieren einer definierten Menge an in die Formwerkzeugkavität des wenigstens einen Formwerkzeugs einbringbarem bzw. einzubringendem Kunststoffmaterialgemisch eingerichtet ist, eine Dosier- bzw. Steuerungsmöglichkeit der Menge eines, insbesondere im Rahmen eines bzw. im Zusammenhang mit einem Flutprozess, in eine Formwerkzeugkavität eines Formwerkzeugs einzubringenden Kunststoffmaterialgemischs, verbesserte Einrichtung zum Einbringen eines in eine Formwerkzeugkavität eines Formwerkzeugs einbringbaren bzw. einzubringenden Kunststoffmaterialgemischs in eine Formwerkzeugkavität, sodass insgesamt eine verbesserte Einrichtung zum Einbringen eines in eine Formwerkzeugkavität eines Formwerkzeugs einbringbaren bzw. einzubringenden Kunststoffmaterialgemischs in eine Formwerkzeugkavität eines Formwerkzeugs gegeben ist.

Denkbare Ausführungsformen der Einrichtung, welche grundsätzlich beliebig miteinander kombinierbar sind, werden nachfolgend in beispielhafter und damit nicht abschließender Aufzählung näher erläutert:
Gemäß einer Ausführungsform der Einrichtung kann die wenigstens eine Zuführeinrichtung ein im Rahmen eines Spritzgießverfahrens, insbesondere eines Kunststoffspritzgießverfahrens, ausgebildetes Bauteil sein. Bei der wenigstens einen Zuführeinrichtung kann es sich sonach um ein Spritzgießbauteil, insbesondere um ein thermoplastisches Spritzgießbauteil, handeln. Insbesondere kann es sich bei der wenigstens einen Zuführeinrichtung um ein im Rahmen des Betriebs einer die Einrichtung umfassenden übergeordneten Vorrichtung, welche zur Herstellung wenigstens eines Kunststoffbauteils mit wenigstens einer zumindest abschnittsweise, gegebenenfalls vollständig, überfluteten Oberfläche eingerichtet ist, herstellbares Spritzgießbauteil handeln. Ein entsprechendes Spritzgießbauteil kann im Rahmen eines Spritzgießzyklus einer entsprechenden Vorrichtung in einer von der weiter oben erwähnten Hauptkavität des wenigstens einen Formwerkzeugs - hierbei handelt es sich um die Formwerkzeugkavität, in welcher das wenigstens eine Kunststoffbauteil mit wenigstens einer zumindest abschnittsweise, gegebenenfalls vollständig, überfluteten Oberfläche herstellbar ist - verschiedenen Hilfskavität des wenigstens einen Formwerkzeugs ausgebildet werden. Eine entsprechende Hilfskavität stellt demnach ein formgebendes Raumvolumen dar, welches die wenigstens eine Zuführeinrichtung abbildet. Ein entsprechendes Spritzgießbauteil kann vor, während und/oder nach dem Entfernen des in der wenigstens einen Hauptkavität hergestellten Kunststoffbauteils mit der zumindest abschnittsweise, gegebenenfalls vollständig, überfluteten Oberfläche aus dem Formwerkzeug entfernt werden. In dieser Ausführungsform sind seitens des wenigstens einen Formwerkzeugs sonach nicht zwingend formwerkzeugtechnische Vorkehrungen zu treffen, um die wenigstens eine Zuführeinrichtung durch entsprechende Bestandteile des wenigstens einen Formwerkzeugs zu realisieren.

Gemäß einer weiteren Ausführungsform der Einrichtung kann z. B. die wenigstens eine Aufnahmekammer der Einrichtung ein im Rahmen eines Spritzgießverfahrens, insbesondere eines Kunststoffspritzgießverfahrens, ausgebildetes Bauteil sein. Bei der wenigstens einen Aufnahmekammer kann es sich sonach um ein Spritzgießbauteil, insbesondere um ein thermoplastisches Spritzgießbauteil, handeln. Insbesondere kann es sich bei der wenigstens einen Aufnahmekammer um ein im Rahmen des Betriebs einer die Einrichtung umfassenden übergeordneten Vorrichtung zur Herstellung wenigstens eines Kunststoffbauteils mit wenigstens einer zumindest abschnittsweise, gegebenenfalls vollständig, überfluteten Oberfläche herstellbares Spritzgießbauteil handeln. Ein entsprechendes Spritzgießbauteil kann im Rahmen eines Spritzgießzyklus einer entsprechenden Vorrichtung in einer von der weiter oben erwähnten Hauptkavität des wenigstens einen Formwerkzeugs - hierbei handelt es sich um die Formwerkzeugkavität, in welcher das wenigstens eine Kunststoffbauteil mit wenigstens einer zumindest abschnittsweise, gegebenenfalls vollständig, überfluteten Oberfläche herstellbar ist - verschiedenen Hilfskavität des wenigstens einen Formwerkzeugs ausgebildet werden. Ein entsprechendes Spritzgießbauteil kann vor, während und/oder nach dem Entfernen des in der wenigstens einen Hauptkavität hergestellten Kunststoffbauteils mit der zumindest abschnittsweise, gegebenenfalls vollständig, überfluteten Oberfläche aus dem Formwerkzeug entfernt werden. Eine entsprechende Hilfskavität stellt demnach ein formgebendes Raumvolumen dar, welches die wenigstens eine Aufnahmekammer abbildet. In dieser Ausführungsform sind seitens des Formwerkzeugs sonach nicht zwingend formwerkzeugtechnische Vorkehrungen zu treffen, um die wenigstens eine Aufnahmekammer durch entsprechende Bestandteile des wenigstensn einen Formwerkzeugs zu realisieren.

Gemäß einer weiteren Ausführungsform der Einrichtung kann die wenigstens eine Zuführeinrichtung und die wenigstens eine Aufnahmekammer jeweils ein im Rahmen eines Spritzgießverfahrens gemeinsam ausgebildetes Bauteil sein. Insbesondere können die wenigstens eine Zuführeinrichtung und die wenigstens eine Aufnahmekammer in dieser Ausführungsform einstückig miteinander verbundene Bauteilabschnitte einer im Rahmen eines Spritzgießverfahrens, insbesondere eines Kunststoffspritzgießverfahrens, einstückig ausgebildeten Bauteilstruktur, insbesondere thermoplastischen Bauteilstruktur, sein. Eine entsprechende Bauteilstruktur kann, analog entsprechenden Spritzgießbauteilen, vor, während und/oder nach dem Entfernen des in der wenigstens einen Hauptkavität hergestellten Kunststoffbauteils mit der zumindest abschnittsweise, gegebenenfalls vollständig, überfluteten Oberfläche aus dem Formwerkzeug entfernt werden. Auch in dieser Ausführungsform sind seitens des wenigstens einen Formwerkzeugs sonach nicht zwingend formwerkzeugtechnische Vorkehrungen zu treffen, um die wenigstens eine Zuführeinrichtung und die wenigstens eine Aufnahmekammer durch entsprechende Bestandteile des wenigstens einen Formwerkzeugs zu realisieren.

Es müssen jedoch nicht alle Bestandteile der Einrichtung zwingend im Rahmen eines Spritzgießverfahrens ausgebildete Bauteile sein. Denkbar sind z. B. Ausführungsformen, in welchen nur die wenigstens eine Zuführeinrichtung oder nur die wenigstens eine Aufnahmekammer ein im Rahmen eines Spritzgießverfahrens ausgebildetes Bauteil ist.

Ebenso ist es - wie sich anhand der im Weiteren beschriebenen Ausführungsformen der Einrichtung ergibt - denkbar, dass kein Bestandteil der Einrichtung als ein im Rahmen eines Spritzgießverfahrens ausgebildetes Bauteil ist.

Gemäß einer weiteren Ausführungsform der Einrichtung kann sonach z. B. die wenigstens eine Aufnahmekammer durch wenigstens einen, insbesondere kammerartigen bzw. -förmigen, Wandungsabschnitt eines Formwerkzeugs oder Formwerkzeugelements, insbesondere des wenigstens einen Formwerkzeugs oder eines Formwerkzeugelements des wenigstens einen Formwerkzeugs, in dessen Formwerkzeugkavität (Hauptkavität) das Kunststoffmaterialgemisch vermittels der Einrichtung einbringbar bzw. einzubringen ist, gebildet sein. In dieser Ausführungsform muss nicht zwingend eine Hilfskavität vorzusehen sein, welches die wenigstens eine Aufnahmekammer abbildet. Dies kann eine kompaktere Konfiguration des jeweiligen Formwerkzeugs ermöglichen.

Gemäß einer weiteren Ausführungsform der Einrichtung kann der wenigstens einen Stelleinrichtung wenigstens eine Antriebseinrichtung zugeordnet sein. Die wenigstens eine Antriebseinrichtung kann eingerichtet sein, eine das wenigstens eine Stellelement der wenigstens einen Stelleinrichtung in eine Bewegung in dem wenigstens einen Bewegungsfreiheitsgrad versetzende Antriebskraft zu erzeugen. Die wenigstens eine Antriebseinrichtung dann daher mit dem wenigstens einen Stellelement der wenigstens einen Stelleinrichtung koppelbar oder gekoppelt sein. Die wenigstens eine Antriebseinrichtung kann z. B. eine motorische bzw. elektromotorische, hydraulische oder pneumatische Antriebseinrichtung sein. Der Betrieb der wenigstens einen Antriebseinrichtung kann über wenigstens eine dieser zugeordnete hardware- und/oder softwaremäßig implementierte Steuereinrichtung gesteuert sein. Die wenigstens eine Steuereinrichtung kann insbesondere eingerichtet sein, den Betrieb der wenigstens einen Antriebseinrichtung in Abhängigkeit des Betriebs einer die Einrichtung umfassenden übergeordneten Vorrichtung, welche zur Herstellung wenigstens eines Kunststoffbauteils mit wenigstens einer zumindest abschnittsweise, gegebenenfalls vollständig, überfluteten Oberfläche eingerichtet ist, zu steuern. Weiter insbesondere kann die wenigstens eine Steuereinrichtung eingerichtet sein, den Betrieb der wenigstens einen Antriebseinrichtung mit dem Betrieb der übergeordneten Vorrichtung, insbesondere im Zusammenhang mit der Durchführung von Spritzgieß- und/oder Flutprozessen, zu synchronisieren.

Gemäß einer weiteren Ausführungsform der Einrichtung kann diese ferner wenigstens eine Sperreinrichtung umfassen. Die wenigstens eine Sperreinrichtung kann wenigstens ein in wenigstens einem, z. B. translatorischen und/oder rotatorischen, Bewegungsfreiheitsgrad bewegbar gelagertes Sperrelement umfassen. Das wenigstens eine Sperrelement kann in wenigstens eine, gegebenenfalls auch als Sperrausrichtung und/oder -position bezeichenbare, erste Ausrichtung und/oder Position bewegbar sein, in welcher es ein Einbringen eines Kunststoffmaterialgemischs in die wenigstens eine Formwerkzeugkavität des wenigstens einen Formwerkzeugs sperrt, und in wenigstens eine, gegebenenfalls auch als Nicht-Sperrausrichtung und/oder -position bezeichenbare, zweite Ausrichtung und/oder Position bewegbar sein, in welcher es ein Einbringen eines Kunststoffmaterialgemischs in die wenigstens eine Formwerkzeugkavität des wenigstens einen Formwerkzeugs nicht sperrt. Durch die wenigstens eine Sperreinrichtung ist eine Maßnahme geschaffen, ein unerwünschtes Einbringen von Kunststoffmaterialgemisch in die Formwerkzeugkavität des wenigstens einen Formwerkzeugs zu unterbinden. Die wenigstens eine Sperreinrichtung kann im Bereich des wenigstens einen zweiten Zuführabschnitts angeordnet oder ausgebildet sein.

Gemäß einer weiteren Ausführungsform der Einrichtung kann die wenigstens eine Sperreinrichtung ein im Rahmen eines Spritzgießverfahrens, insbesondere eines Kunststoffspritzgießverfahrens, ausgebildetes Bauteil sein. Bei der wenigstens einen Sperreinrichtung kann es sich sonach um ein Spritzgießbauteil, insbesondere um ein thermoplastisches Spritzgießbauteil, handeln. Insbesondere kann es sich bei der wenigstens einen Sperreinrichtung um ein im Rahmen des Betriebs einer die Einrichtung umfassenden übergeordneten Vorrichtung, welche zur Herstellung wenigstens eines Kunststoffbauteils mit wenigstens einer zumindest abschnittsweise, gegebenenfalls vollständig, überfluteten Oberfläche eingerichtet ist, herstellbares Spritzgießbauteil handeln. Ein entsprechendes Spritzgießbauteil kann im Rahmen eines Spritzgießzyklus einer entsprechenden Vorrichtung in einer von der weiter oben erwähnten Hauptkavität des wenigstens einen Formwerkzeugs - hierbei handelt es sich um die Formwerkzeugkavität, in welcher das wenigstens eine Kunststoffbauteil mit wenigstens einer zumindest abschnittsweise, gegebenenfalls vollständig, überfluteten Oberfläche herstellbar ist - verschiedenen Hilfskavität des wenigstens einen Formwerkzeugs ausgebildet werden. Eine entsprechende Hilfskavität stellt demnach ein Raumvolumen dar, welches die wenigstens eine Sperreinrichtung abbildet. Ein entsprechendes Spritzgießbauteil kann vor, während und/oder nach dem Entfernen des in der wenigstens einen Hauptkavität hergestellten Kunststoffbauteils mit der zumindest abschnittsweise, gegebenenfalls vollständig, überfluteten Oberfläche aus dem Formwerkzeug entfernt werden. In dieser Ausführungsform sind seitens des wenigstens einen Formwerkzeugs sonach nicht zwingend formwerkzeugtechnische Vorkehrungen zu treffen, um die wenigstens eine Sperreinrichtung durch entsprechende Bestandteile des wenigstens einen Formwerkzeugs zu realisieren.

Gemäß einer weiteren Ausführungsform der Einrichtung kann die wenigstens eine Sperreinrichtung durch wenigstens einen, insbesondere schieberartigen bzw. - förmigen, Wandungsabschnitt eines Formwerkzeugs oder Formwerkzeugelements, insbesondere des wenigstens einen Formwerkzeugs oder eines Formwerkzeugelements des wenigstens einen Formwerkzeugs, in dessen Formwerkzeugkavität das Kunststoffmaterialgemisch vermittels der Einrichtung einzubringen ist, gebildet sein. In dieser Ausführungsform muss nicht zwingend eine Hilfskavität vorzusehen sein, welches die wenigstens eine Sperreinrichtung abbildet. Dies kann eine kompaktere Konfiguration des jeweiligen Formwerkzeugs ermöglichen.

In allen Ausführungsformen der Einrichtung kann die wenigstens eine Sperreinrichtung ein oder mehrere Führungsabschnitte aufweisen, welche eingerichtet sind, eine Bewegung des wenigstens einen Sperrelements in die erste und/oder zweite Ausrichtung und/oder Position zu führen. Durch entsprechende Führungsabschnitte ist eine besonders exakte Überführung des wenigstens einen Sperrelements in jeweilige erste und/oder zweite Ausrichtung und/oder Positionen möglich.

In allen Ausführungsformen der Einrichtung kann der wenigstens einen Sperreinrichtung wenigstens eine Antriebseinrichtung zugeordnet sein. Die wenigstens eine Antriebseinrichtung kann eingerichtet sein, eine das wenigstens eine Sperrelement in eine Bewegung in dem wenigstens einen Bewegungsfreiheitsgrad versetzende Antriebskraft zu erzeugen. Die wenigstens eine Antriebseinrichtung dann daher mit dem wenigstens einen Sperrelement der wenigstens einen Sperreinrichtung koppelbar oder gekoppelt sein. Die wenigstens eine Antriebseinrichtung kann z. B. eine motorische bzw. elektromotorische, hydraulische oder pneumatische Antriebseinrichtung sein. Der Betrieb der wenigstens einen Antriebseinrichtung kann über wenigstens eine dieser zugeordnete hardware- und/oder softwaremäßig implementierte Steuereinrichtung gesteuert sein. Die wenigstens eine Steuereinrichtung kann insbesondere eingerichtet sein, den Betrieb der wenigstens einen Antriebseinrichtung in Abhängigkeit des Betriebs der Stelleinrichtung zu steuern. Weiter insbesondere kann die wenigstens eine Steuereinrichtung eingerichtet sein, den Betrieb der wenigstens einen Antriebseinrichtung mit dem Betrieb der wenigstens einen Stelleinrichtung zu synchronisieren. Dies kann z. B. bedeuten, dass das wenigstens eine Sperrelement der wenigstens einen Sperreinrichtung in die Nicht-Sperrstellung bewegt wird, wenn das wenigstens eine Stellelement der Stelleinrichtung in die ausgefahrene Ausrichtung und/oder Position bewegt wird oder in die ausgefahrene Ausrichtung und/oder Position bewegt ist. Die wenigstens eine Steuereinrichtung der wenigstens einen Sperreinrichtung kann sonach jedenfalls mittelbar eingerichtet sein, den Betrieb der wenigstens einen Antriebseinrichtung in Abhängigkeit des Betriebs einer die Einrichtung umfassenden übergeordneten Vorrichtung, welche zur Herstellung wenigstens eines Kunststoffbauteils mit wenigstens einer zumindest abschnittsweise, gegebenenfalls vollständig, überfluteten Oberfläche eingerichtet ist, zu steuern. Weiter insbesondere kann die wenigstens eine Steuereinrichtung eingerichtet sein, den Betrieb der wenigstens einen Antriebseinrichtung mit dem Betrieb der übergeordneten Vorrichtung, insbesondere im Zusammenhang mit der Durchführung von Spritzgieß- und/oder Flutprozessen, zu synchronisieren.

Aus vorstehenden Erläuterungen ergibt sich im Allgemeinen, dass die Einrichtung in einer Ausführungsform wenigstens eine hardware- und/oder softwaremäßig implementierte Steuereinrichtung umfassen kann, welche zur, insbesondere synchronisierten, Steuerung des Betriebs der der wenigstens einen Stelleinrichtung zugeordneten Antriebseinrichtung und/oder der der wenigstens einen Sperreinrichtung zugeordneten Antriebseinrichtung eingerichtet ist.

Ein zweiter Aspekt der Erfindung betrifft eine Vorrichtung zur Herstellung eines Kunststoffbauteils, insbesondere eines zumindest abschnittsweise durch ein flutbares mehrkomponentiges Kunststoffmaterialgemisch hergestellten Kunststoffbauteils. Die Vorrichtung umfasst insbesondere wenigstens ein wenigstens eine Formwerkzeugkavität, d. h. insbesondere eine entsprechende Hauptkavität sowie gegebenenfalls wenigstens eine entsprechende Hilfskavität, aufweisendes wenigstens einen Formwerkzeug; wenigstens eine Bereitstellungseinrichtung, insbesondere eine Mischkopfeinrichtung, welche zur Bereitstellung eines, insbesondere im Zusammenhang mit einem Flutprozess, in die wenigstens eine Formwerkzeugkavität des wenigstens einen Formwerkzeugs einbringbaren bzw. einzubringenden Kunststoffmaterialgemischs bereitzustellen; und wenigstens eine Einrichtung nach dem ersten Aspekt der Erfindung. Mithin gelten sämtliche Ausführungen im Zusammenhang mit der Einrichtung nach dem ersten Aspekt der Erfindung analog für die Vorrichtung nach dem zweiten Aspekt der Erfindung und umgekehrt.

Wie erwähnt, kann/können die wenigstens eine Zuführeinrichtung und/oder die wenigstens eine Aufnahmekammer und/oder die wenigstens eine Sperreinrichtung der Einrichtung im Betrieb der Vorrichtung, d. h. im Rahmen eines vermittels der Vorrichtung durchgeführten Spritzgießvorgangs, als Spritzgießbauteil ausgebildet werden.

Ein dritter Aspekt der Erfindung betritt ein Verfahren zum Betrieb einer Vorrichtung zur Herstellung eines Kunststoffbauteils, insbesondere eines zumindest abschnittsweise durch ein flutbares mehrkomponentiges Kunststoffmaterialgemisch hergestellten Kunststoffbauteils, wobei im Rahmen des Verfahrens eine Einrichtung nach dem ersten Aspekt der Erfindung ausgebildet und/oder verwendet wird, um ein in eine Formwerkzeugkavität eines Formwerkzeugs einbringbares bzw. einzubringendes Kunststoffmaterialgemisch in eine Formwerkzeugkavität eines Formwerkzeugs einzubringen. Mithin gelten sämtliche Ausführungen im Zusammenhang mit der Einrichtung nach dem ersten Aspekt der Erfindung analog für das Verfahren nach dem dritten Aspekt der Erfindung und umgekehrt.

Einzelne Merkmale der Erfindung sind anhand von Ausführungsbeispielen in den Zeichnungen nochmals erläutert. Dabei zeigt:
Fig. 1 eine Prinzipdarstellung einer Vorrichtung gemäß einem Ausführungsbeispiel; und
Fig 2, 3 jeweils eine Prinzipdarstellung einer Einrichtung gemäß einem Ausführungsbeispiel in unterschiedlichen Betriebszuständen bzw. Ausrichtungen und/oder Positionen des Stellelements.

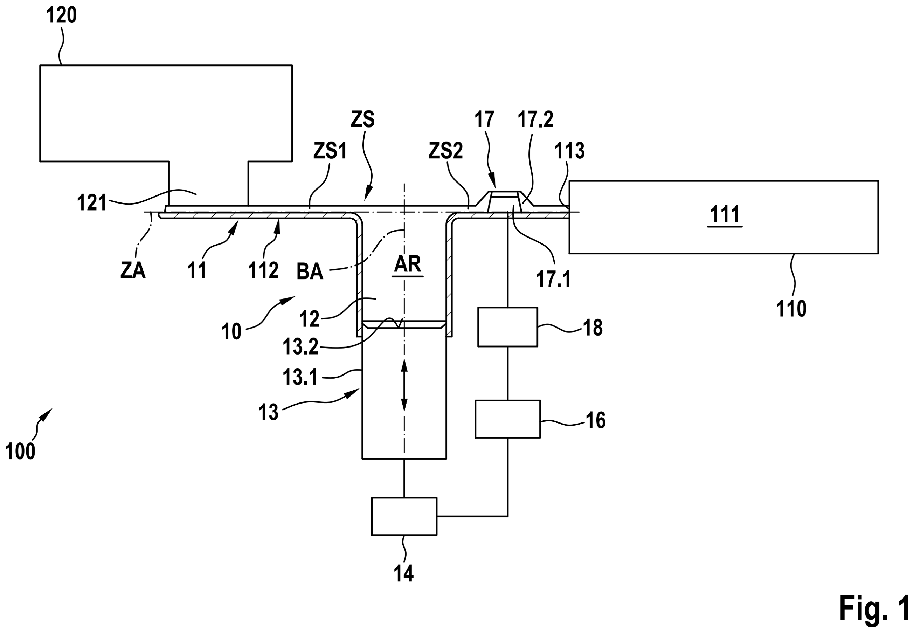

Fig. 1 zeigt in einer, jedenfalls, was die Einrichtung 10 betrifft, längsgeschnittenen Ansicht eine Prinzipdarstellung einer Vorrichtung 100 zur Herstellung eines Kunststoffbauteils, d. h. eines zumindest abschnittsweise durch ein flutbares mehrkomponentiges Kunststoffmaterialgemisch hergestellten Kunststoffbauteils.

Die Vorrichtung 100 umfasst ein wenigstens eine Formwerkzeugkavität 111, d. h. insbesondere eine Hauptkavität sowie gegebenenfalls wenigstens eine entsprechende Hilfskavität 112, aufweisendes Formwerkzeug 110; wenigstens eine Bereitstellungseinrichtung 120, insbesondere eine Mischkopfeinrichtung, welche zur Bereitstellung eines, insbesondere im Zusammenhang mit einem Flutprozess, in die Formwerkzeugkavität 111 des Formwerkzeugs 110 einbringbaren bzw. einzubringenden Kunststoffmaterialgemischs bereitzustellen; und wenigstens eine Einrichtung 10, welche zum Einbringen eines, insbesondere im Rahmen eines Flutprozesses bzw. im Zusammenhang mit einem Flutprozess, in die Formwerkzeugkavität 111 des Formwerkzeugs 110 einbringbaren bzw. einzubringenden mehrkomponentigen Kunststoffmaterialgemischs eingerichtet ist.

Bei einem entsprechenden, im Weiteren kurz als "Kunststoffmaterialgemisch" bezeichneten mehrkomponentigen Kunststoffmaterialgemisch handelt es sich um ein reaktives Kunststoffmaterialgemisch, welches wenigstens zwei reaktive Materialkomponenten enthält. Ein konkretes, jedoch nicht einschränkendes Beispiel eines entsprechenden Kunststoffmaterialgemischs ist ein Gemisch, welches die Materialkomponenten eines Polyurethans, mithin Polyole und Polyisocyanate, enthält. Grundsätzlich kommt jedwedes Kunststoffmaterialgemisch in Betracht, welches im Rahmen eines Flutprozesses verarbeitbar bzw. zu verarbeiten und damit insbesondere in eine Formwerkzeugkavität eines Formwerkzeugs einbringbar bzw. einzubringen ist. Ein entsprechendes Kunststoffmaterialgemisch ist fließfähig und weist typischerweise eine vergleichsweise niedrige Viskosität auf, sodass es im Rahmen von Flutprozessen bzw. -vorgängen verarbeitbar ist, etwa um eine oder mehrere Oberflächen eines Kunststoffbauteils zu überfluten und so ein Kunststoffbauteil mit besonderen Oberflächeneigenschaften herzustellen.

Die Einrichtung 10 bildet daher einen Bestandteil einer Fluteinrichtung der Vorrichtung 100, welche Fluteinrichtung zur Durchführung von Flutprozessen bzw. - vorgängen eingerichtet ist. Die Vorrichtung 100 kann neben der Einrichtung 10 weitere Bestandteile, wie beispielsweise die bereits erwähnte, z. B. durch eine Mischkopfeinrichtung gebildete oder einen solchen umfassende Bereitstellungseinrichtung 120 zum Bereitstellen eines entsprechenden Kunststoffmaterialgemischs, ein der Bereitstellungseinrichtung 120 zugeordnetes erstes Reservoir (nicht gezeigt) bzw. im Allgemeinen einen ersten Behälter zum Bereitstellen einer ersten Komponente eines entsprechenden Kunststoffmaterialgemischs, welchem gegebenenfalls eine Fördereinrichtung (nicht gezeigt), etwa in Form einer Pumpeneinrichtung, zum Fördern der ersten Komponente des mehrkomponentigen Kunststoffmaterialgemischs, zugeordnet ist, wenigstens ein der Bereitstellungseinrichtung 120 zugeordnetes weiteres Reservoir (nicht gezeigt) bzw. im Allgemeinen wenigstens einen weiteren Behälter zum Bereitstellen einer weiteren Komponente eines entsprechenden Kunststoffmaterialgemischs, welchem gegebenenfalls eine Fördereinrichtung (nicht gezeigt), etwa in Form einer Pumpeneinrichtung, zum Fördern der weiteren Komponente des mehrkomponentigen Kunststoffmaterialgemischs, zugeordnet ist, sowie das Formwerkzeug 110 umfassen.

Die Formwerkzeugkavität 111 des Formwerkzeugs 110 kann so ausgeführt, d. h. insbesondere dimensioniert, sein, um im Rahmen eines Flutprozesses ein Kunststoffbauteil mit wenigstens einer zumindest abschnittsweise überfluteten Oberfläche auszubilden. Die Formwerkzeugkavität 111 des Formwerkzeugs 110 kann sonach so ausgeführt, d. h. insbesondere dimensioniert, sein, dass sich in dieser ein, gegebenenfalls auch als Trägerbauteil zu erachtendes bzw. zu bezeichnendes, Kunststoffbauteil ausbilden oder anordnen lässt und sich wenigstens eine Oberfläche des Kunststoffbauteils zumindest abschnittsweise, gegebenenfalls vollständig, mit dem Kunststoffmaterialgemisch überfluten lässt. Die Formwerkzeugkavität 111 kann insofern auch als Hauptkavität des Formwerkzeugs 110 erachtet bzw. bezeichnet werden.

Die Einrichtung 10 umfasst insbesondere die im Weiteren näher beschriebenen Bestandteile:
Die Einrichtung 10 umfasst Zuführeinrichtung 11. Die Zuführeinrichtung 11 definiert eine Zuführstrecke ZS. Die Zuführstrecke ZS kann durch ein oder mehrere Wandungen der Zuführeinrichtung 11 gebildet sein. Die Zuführstrecke ZS kann wenigstens eine, z. B. geradlinig oder gebogen verlaufende, Zuführachse ZA aufweisen. Die Zuführstrecke ZS erstreckt sich in dem Ausführungsbeispiel zwischen der Bereitstellungseinrichtung 120 und der rein schematisch angedeuteten Formwerkzeugkavität 111 des Formwerkzeugs 110, in welches das über die Bereitstellungseinrichtung 120 bereitstellbare bzw. bereitgestellte Kunststoffmaterialgemisch einzubringen ist.

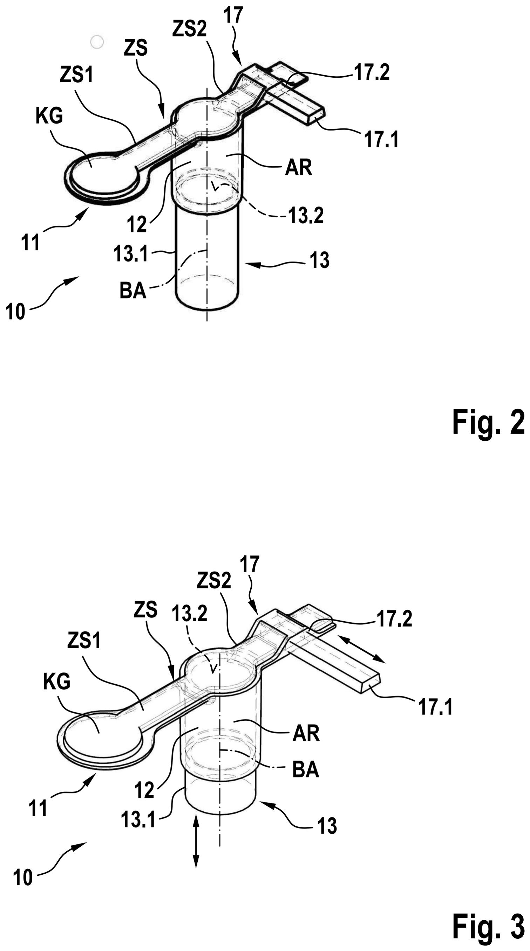

Ersichtlich kann die Zuführstrecke ZS durch wenigstens einen sich, insbesondere plattenartigen bzw. -förmigen, Zuführabschnitt gebildet sein oder wenigstens einen solchen umfassen. Die Zuführstrecke ZS bildet sonach eine Oberfläche, auf bzw. entlang welcher das Kunststoffmaterialgemisch KG, wie in Fig. 2 beispielhaft angedeutet, in Richtung der Formwerkzeugkavität 111 des Formwerkzeugs 110 fließen kann. Die Zuführstrecke ZS kann sonach über einen ersten Zuführstreckenabschnitt ZS1 und einen zweiten Zuführstreckenabschnitt ZS2 verfügen, welche die erwähnte Zuführachse ZA bilden bzw. welche sich entlang der erwähnten Zuführachse ZS erstrecken. Der erste Zuführstreckenabschnitt ZS1 kann durch ein oder mehrere erste Wandungen der Zuführeinrichtung 11 gebildet sein. Der zweite Zuführstreckenabschnitt ZS2 kann durch ein oder mehrere zweite Wandungen der Zuführeinrichtung 11 gebildet sein.

Der erste Zuführstreckenabschnitt ZS1 der Bereitstellungseinrichtung 120 kann, insbesondere einem Ausgang 121 der Bereitstellungseinrichtung 120, und der zweite Zuführstreckenabschnitt ZS2 dem Formwerkzeug 110, in dessen Formwerkzeugkavität 111 das Kunststoffmaterialgemisch einzubringen ist, zugeordnet sein.

Der erste Zuführstreckenabschnitt ZS1 kann im Bereich eines ersten freien Endes der Zuführstrecke ZS angeordnet oder ausgebildet sein oder ein erstes freies Ende der Zuführstrecke ZS bilden. Der zweite Zuführstreckenabschnitt ZS2 kann im Bereich eines zweiten freien Endes der Zuführstrecke ZS angeordnet oder ausgebildet sein oder ein zweites freies Ende der Zuführstrecke ZS bilden.

Der zweite Zuführstreckenabschnitt ZS2 kann, insbesondere direkt, an wenigstens eine Schnittstelle, wie z. B. einen Eingang 113 bzw. eine Eingangsöffnung, des wenigstens einen Formwerkzeugs 110 ankoppeln bzw. in eine(n) solche(n) übergehen, über welche(n) das in die Formwerkzeugkavität 111 des Formwerkzeugs 110 einzubringende Kunststoffmaterialgemisch in die Formwerkzeugkavität 111 des Formwerkzeugs 110 einbringbar ist, um dort im Rahmen eines Flutprozesses ein Kunststoffbauteil mit wenigstens einer zumindest abschnittsweise überfluteten Oberfläche auszubilden.

Wie erwähnt, kann es sich bei der Bereitstellungseinrichtung 120 z. B. um eine Mischkopfeinrichtung handeln, welche ein entsprechendes Kunststoffmaterialgemisch über wenigstens einen Ausgang 121 bereitstellt. Dem wenigstens einen Ausgang 121 kann wenigstens eine Ventileinrichtung (nicht gezeigt) zugeordnet bzw. zugehörig sein, welche zum Dosieren bzw. Steuern einer bestimmten Menge des über den wenigstens einen Ausgang 121 aus der Bereitstellungseinrichtung 120 an bzw. auf die Zuführstrecke ZS der Einrichtung 10 auszugebenden Kunststoffmaterialgemisch eingerichtet ist.

Die Einrichtung 10 umfasst weiterhin eine Aufnahmekammer 12. Die Aufnahmekammer 12 umfasst wenigstens einen Aufnahmeraum AR zur Aufnahme von einem, insbesondere im Zusammenhang mit einem Flutprozess, in die Formwerkzeugkavität 111 des Formwerkzeugs 110 einbringbaren bzw. einzubringenden Kunststoffmaterialgemisch. Der Aufnahmeraum AR kann durch ein oder mehrere dritte Wandungen der Zuführeinrichtung 10 gebildet sein. Der Aufnahmeraum AR definiert ein definiertes Raumvolumen und ist sonach zur Aufnahme einer definierten Menge an in die Formwerkzeugkavität 111 des Formwerkzeugs 110 einbringbarem bzw. einzubringendem Kunststoffmaterialgemisch eingerichtet. Der Aufnahmeraum AR dient insbesondere dazu, eine bestimmte Menge eines entsprechenden Kunststoffmaterialgemischs, etwa im Hinblick auf ein mit dem Kunststoffmaterialgemisch zu füllendes Volumen der Formwerkzeugkavität 111 des Formwerkzeugs 110, vorzudosieren. Die Aufnahmekammer 12 kann insofern auch als Dosierkammer und der Aufnahmeraum AR insofern auch als Dosierraum bezeichnet bzw. erachtet werden. Der Aufnahmeraum AR kann grundsätzlich auch dazu dienen, die jeweiligen Komponenten eines in diesem aufgenommenen Kunststoffmaterialgemischs nochmals zu vermischen.

Die Aufnahmekammer 12 ist in dem Ausführungsbeispiel zwischen dem ersten Zuführstreckenabschnitt ZS1 und dem zweiten Zuführstreckenabschnitt ZS2 angeordnet oder ausgebildet; insbesondere derart, dass das Kunststoffmaterialgemisch bei einem Fließen ausgehend von dem ersten Zuführstreckenabschnitt ZS1 in Richtung des zweiten Zuführstreckenabschnitts ZS2 die Aufnahmekammer 12 passiert, sodass die Aufnahmekammer 12 mit dem Kunststoffmaterialgemisch gefüllt wird bzw. werden kann, bevor das Kunststoffmaterialgemisch in die Formwerkzeugkavität 111 des Formwerkzeugs 110 einbringbar bzw. eingebracht ist. Der Zuführabschnitt der Zuführstrecke ZS kann sich sonach mit einem ersten Bereich in Richtung einer (oberen bzw. freiliegenden) Öffnung der Aufnahmekammer 12 erstrecken bzw. in die Öffnung der Aufnahmekammer 12 münden, und sich mit einem zweiten Bereich ausgehend von der Öffnung der Aufnahmekammer 12 in Richtung der Formwerkzeugkavität 111 des Formwerkzeugs 110 erstrecken.

Wie sich im Weiteren ergibt, kann die Aufnahmekammer 12 auch als Dosierkammer erachtet bzw. bezeichnet werden, da aus dieser eine definierte Menge an in die Formwerkzeugkavität 111 des Formwerkzeugs 110 einbringbarem bzw. einzubringendem Kunststoffmaterialgemisch dosiert werden kann. Die Aufnahmekammer 12 kann sonach einen ersten Bestandteil einer in die Einrichtung 10 integrierten Dosiereinrichtung darstellen, welche zum Dosieren einer definierten Menge an in die Formwerkzeugkavität 111 des Formwerkzeugs 110 einbringbarem bzw. einzubringendem Kunststoffmaterialgemisch eingerichtet ist.

Die Einrichtung 10 umfasst weiterhin eine der Aufnahmekammer 12 zugeordnete Stelleinrichtung 13. Die Stelleinrichtung 13 umfasst ein in wenigstens einem Bewegungsfreiheitsgrad bewegbar gelagertes Stellelement 13.1. Das Stellelement 13.1 ist eingerichtet, durch eine Bewegung in dem wenigstens einen Bewegungsfreiheitsgrad in dem Aufnahmeraum AR aufgenommenes Kunststoffmaterialgemisch, d. h. insbesondere eine definierte Menge an in dem Aufnahmeraum AR aufgenommenem Kunststoffmaterialgemisch, aus dem Aufnahmeraum AR in die oder in Richtung der Formwerkzeugkavität 111 des Formwerkzeugs 110, in welches das Kunststoffmaterialgemisch einzubringen ist, zu bewegen. Das Stellelement 13.1 ist, wie durch den Doppelpfeil in Fig. 1 und den Doppelpfeil in Fig. 3 angedeutet, insbesondere eingerichtet, durch eine Bewegung in dem wenigstens einen Bewegungsfreiheitsgrad in dem Aufnahmeraum AR aufgenommenes Kunststoffmaterialgemisch aus dem Aufnahmeraum AR auf den zweiten Zuführstreckenabschnitt ZS2 aufzubringen bzw. zu fördern, über welchen das Kunststoffmaterialgemisch in die oder in Richtung der Formwerkzeugkavität 111 des Formwerkzeugs 110, in welches das Kunststoffmaterialgemisch einzubringen ist, bewegbar ist. Insbesondere kann das Stellelement 13.1 zwischen wenigstens einer, gegebenenfalls auch als eingefahrene Ausrichtung und/oder Position bezeichenbaren, ersten Ausrichtung und/oder Position (vgl. Fig. 2), welche mit einem ersten Aufnahmevolumen des Aufnahmeraums AR korreliert, und wenigstens einer, gegebenenfalls auch als ausgefahrene Ausrichtung und/oder Position bezeichenbaren, zweiten Ausrichtung und/oder Position (vgl. Fig. 3), welche mit einem von dem ersten Aufnahmevolumen verschiedenen, d. h. insbesondere kleineren, zweiten Aufnahmevolumen des Aufnahmeraums AR korreliert, bewegbar sein.

Das Stellelement 13.1 kann einen den Aufnahmeraum AR, insbesondere bodenseitig, definierenden bzw. begrenzenden Wandungsabschnitt 13.2 aufweisen. Das Stellelement 13.1 kann z. B. als Stößel ausgebildet sein oder einen solchen umfassen. Der wenigstens eine Bewegungsfreiheitsgrad kann ein translatorischer und/oder rotatorischer Bewegungsfreiheitsgrad sein, welcher eine Bewegung des Stellelements 13.1 in Richtung einer sich durch den Aufnahmeraum AR erstreckenden Bewegungsachse BA, insbesondere einer Zentralachse des Aufnahmeraums AR, ermöglicht. Die Bewegungsachse BA kann winklig, insbesondere stumpf-, recht- oder spitzwinklig, relativ zu der Zuführachse ZA ausgerichtet sein.

Die Stelleinrichtung 13 kann sonach einen zweiten Bestandteil der in die Einrichtung 10 integrierten Dosiereinrichtung darstellen, welche zum Dosieren einer definierten Menge an in die Formwerkzeugkavität 111 des Formwerkzeugs 110 einbringbarem bzw. einzubringendem Kunststoffmaterialgemisch eingerichtet ist.

Die Einrichtung 10 ermöglicht sonach, insbesondere aufgrund der beschriebenen in diese integrierbaren bzw. integrierten Dosiereinrichtung, welche zum Dosieren einer definierten Menge an in die Formwerkzeugkavität 111 des Formwerkzeugs 110 einbringbarem bzw. einzubringendem Kunststoffmaterialgemisch eingerichtet ist, eine Dosier- bzw. Steuerungsmöglichkeit der Menge eines, insbesondere im Rahmen eines bzw. im Zusammenhang mit einem Flutprozess, in die Formwerkzeugkavität 111 des Formwerkzeugs 110 einzubringenden Kunststoffmaterialgemischs, verbesserte Einrichtung 10 zum Einbringen eines in eine Formwerkzeugkavität eines Formwerkzeugs einbringbaren bzw. einzubringenden Kunststoffmaterialgemischs in eine Formwerkzeugkavität, sodass insgesamt eine verbesserte Einrichtung 10 zum Einbringen eines in eine Formwerkzeugkavität eines Formwerkzeugs einbringbaren bzw. einzubringenden Kunststoffmaterialgemischs in eine Formwerkzeugkavität eines Formwerkzeugs gegeben ist.

Die Zuführeinrichtung 11 kann ein im Rahmen eines Spritzgießverfahrens, insbesondere eines Kunststoffspritzgießverfahrens, ausgebildetes Bauteil sein. Bei der Zuführeinrichtung 11 kann es sich sonach um ein Spritzgießbauteil, insbesondere um ein thermoplastisches Spritzgießbauteil, handeln. Insbesondere kann es sich bei der Zuführeinrichtung 11 um ein im Rahmen des Betriebs der die Einrichtung 10 umfassenden Vorrichtung 100 herstellbares Spritzgießbauteil handeln. Ein entsprechendes Spritzgießbauteil kann im Rahmen eines Spritzgießzyklus der Vorrichtung 100 in einer von der weiter oben erwähnten Hauptkavität (vgl. Formwerkzeugkavität 111) des Formwerkzeugs110 verschiedenen Hilfskavität des Formwerkzeugs 110 ausgebildet werden. Eine entsprechende Hilfskavität stellt demnach ein Raumvolumen dar, welches die Zuführeinrichtung 11 abbildet. Ein entsprechendes Spritzgießbauteil kann vor, während und/oder nach dem Entfernen des in der Hauptkavität hergestellten Kunststoffbauteils mit der zumindest abschnittsweise, gegebenenfalls vollständig, überfluteten Oberfläche aus dem Formwerkzeug 110 entfernt werden. Eine entsprechende Hilfskavität stellt demnach ein formgebendes Raumvolumen dar, welches die Zuführeinrichtung 11 abbildet.

Alternativ oder ergänzend kann z. B. die Aufnahmekammer 12 ein im Rahmen eines Spritzgießverfahrens, insbesondere eines Kunststoffspritzgießverfahrens, ausgebildetes Bauteil sein. Bei der Aufnahmekammer 12 kann es sich sonach um ein Spritzgießbauteil, insbesondere um ein thermoplastisches Spritzgießbauteil, handeln. Insbesondere kann es sich bei der Aufnahmekammer 12 um ein im Rahmen des Betriebs der die Einrichtung 10 umfassenden übergeordneten Vorrichtung 100 herstellbares Spritzgießbauteil handeln. Ein entsprechendes Spritzgießbauteil kann im Rahmen eines Spritzgießzyklus der Vorrichtung 100 in einer von der weiter oben erwähnten Hauptkavität vgl. Formwerkzeugkavität 111) des Formwerkzeugs 110 verschiedenen Hilfskavität des Formwerkzeugs 110 ausgebildet werden. Ein entsprechendes Spritzgießbauteil kann vor, während und/oder nach dem Entfernen des in der wenigstens einen Hauptkavität hergestellten Kunststoffbauteils mit der zumindest abschnittsweise, gegebenenfalls vollständig, überfluteten Oberfläche aus dem Formwerkzeug 110 entfernt werden. Eine entsprechende Hilfskavität stellt demnach ein formgebendes Raumvolumen dar, welches die Aufnahmekammer 12 abbildet.

Ebenso kann sowohl die Zuführeinrichtung 11 als auch die Aufnahmekammer 12 jeweils ein im Rahmen eines Spritzgießverfahrens gemeinsam ausgebildetes Bauteil sein. Insbesondere können die Zuführeinrichtung 11 und die Aufnahmekammer 12 in einstückig miteinander verbundene Bauteilabschnitte einer im Rahmen eines Spritzgießverfahrens, insbesondere eines Kunststoffspritzgießverfahrens, einstückig ausgebildeten Bauteilstruktur, insbesondere thermoplastischen Bauteilstruktur, sein. Eine entsprechende Bauteilstruktur kann, analog entsprechenden Spritzgießbauteilen, vor, während und/oder nach dem Entfernen des in der Hauptkavität hergestellten Kunststoffbauteils mit der zumindest abschnittsweise, gegebenenfalls vollständig, überfluteten Oberfläche aus dem Formwerkzeug entfernt werden.

Es müssen jedoch nicht alle Bestandteile der Einrichtung 10 im Rahmen eines Spritzgießverfahrens ausgebildete Bauteile sein. Denkbar sind z. B. Ausführungsformen, in welchen nur die Zuführeinrichtung 11 oder nur die Aufnahmekammer 12 ein im Rahmen eines Spritzgießverfahrens ausgebildetes Bauteil ist.

Ebenso ist es denkbar, dass kein Bestandteil der Einrichtung 10 als ein im Rahmen eines Spritzgießverfahrens ausgebildetes Bauteil ist.

Entsprechend kann sonach z. B. die Aufnahmekammer 12 durch wenigstens einen, insbesondere kammerartigen bzw. -förmigen, Wandungsabschnitt des Formwerkzeugs 110 oder Formwerkzeugelements, insbesondere des Formwerkzeugs 110 oder eines Formwerkzeugelements des Formwerkzeugs 110, in dessen Formwerkzeugkavität (Hauptkavität) das Kunststoffmaterialgemisch vermittels der Einrichtung 10 einbringbar bzw. einzubringen ist, gebildet sein.

Anhand von Fig. 1 ist ersichtlich, dass der Stelleinrichtung 13 eine lediglich in Fig. 1 schematisch angedeutete Antriebseinrichtung 14 zugeordnet sein kann, welche eingerichtet ist, eine das Stellelement 13.1 in eine Bewegung in dem wenigstens einen Bewegungsfreiheitsgrad versetzende Antriebskraft zu erzeugen. Die Antriebseinrichtung 14 dann daher mit dem Stellelement 13.1 koppelbar oder gekoppelt sein. Die Antriebseinrichtung 14 kann z. B. eine motorische bzw. elektromotorische, hydraulische oder pneumatische Antriebseinrichtung sein. Der Betrieb der Antriebseinrichtung 14 kann über eine dieser zugeordnete. lediglich in Fig. 1 schematisch angedeutete hardware- und/oder softwaremäßig implementierte Steuereinrichtung 16 gesteuert sein. Die Steuereinrichtung 16 kann insbesondere eingerichtet sein, den Betrieb der Antriebseinrichtung 14 in Abhängigkeit des Betriebs der Vorrichtung 100 zu steuern. Weiter insbesondere kann die Steuereinrichtung 16 eingerichtet sein, den Betrieb der Antriebseinrichtung 14 mit dem Betrieb der Vorrichtung 100, insbesondere im Zusammenhang mit der Durchführung von Spritzgieß- und/oder Flutprozessen, zu synchronisieren.

Anhand der Fig. ist ferner ersichtlich, dass die Einrichtung 10 eine Sperreinrichtung 17 umfassen kann. Die Sperreinrichtung 17 kann ein in wenigstens einem Bewegungsfreiheitsgrad, dieser ist in Fig. 3 beispielhaft durch den Doppelpfeil rechts angedeutet, bewegbar gelagertes Sperrelement 17.1 umfassen. Das Sperrelement 17.1 kann in wenigstens eine, gegebenenfalls auch als Sperrausrichtung und/oder - position bezeichenbare, erste Ausrichtung und/oder Position bewegbar sein, in welcher es ein Einbringen eines Kunststoffmaterialgemischs in die Formwerkzeugkavität 111 des Formwerkzeugs 110 sperrt, und in wenigstens eine, gegebenenfalls auch als Nicht-Sperrausrichtung und/oder -position bezeichenbare, zweite Ausrichtung und/oder Position bewegbar sein, in welcher es ein Einbringen eines Kunststoffmaterialgemischs in die Formwerkzeugkavität 111 des Formwerkzeugs 110 nicht sperrt. Durch die Sperreinrichtung 17 ist eine Maßnahme geschaffen, ein unerwünschtes Einbringen von Kunststoffmaterialgemisch in die Formwerkzeugkavität 111 des Formwerkzeugs 110 zu unterbinden. Ersichtlich kann die Sperreinrichtung 17 im Bereich des zweiten Zuführabschnitts ZS2 angeordnet oder ausgebildet sein.

Auch die Sperreinrichtung 17 kann ein im Rahmen eines Spritzgießverfahrens, insbesondere eines Kunststoffspritzgießverfahrens, ausgebildetes Bauteil sein. Bei der Sperreinrichtung 17 kann es sich sonach um ein Spritzgießbauteil, insbesondere um ein thermoplastisches Spritzgießbauteil, handeln. Insbesondere kann es sich bei der Sperreinrichtung 17 um ein im Rahmen des Betriebs der Vorrichtung 100 herstellbares Spritzgießbauteil handeln. Ein entsprechendes Spritzgießbauteil kann im Rahmen eines Spritzgießzyklus der Vorrichtung 100 in einer von der weiter oben erwähnten Hauptkavität des Formwerkzeugs 110 verschiedenen Hilfskavität des Formwerkzeugs 110 ausgebildet werden. Eine entsprechende Hilfskavität stellt demnach ein formgebendes Raumvolumen dar, welches die Sperreinrichtung 17 abbildet. Ein entsprechendes Spritzgießbauteil kann vor, während und/oder nach dem Entfernen des in der wenigstens einen Hauptkavität hergestellten Kunststoffbauteils mit der zumindest abschnittsweise, gegebenenfalls vollständig, überfluteten Oberfläche aus dem Formwerkzeug 110 entfernt werden.

Alternativ kann die Sperreinrichtung 17 durch wenigstens einen, insbesondere schieberartigen bzw. -förmigen, Wandungsabschnitt des Formwerkzeugs 110 oder eines Formwerkzeugelements, insbesondere des Formwerkzeugs 110 oder eines Formwerkzeugelements des Formwerkzeugs 110, in dessen Formwerkzeugkavität das Kunststoffmaterialgemisch vermittels der Einrichtung 10 einzubringen ist, gebildet sein.

Ersichtlich kann die Sperreinrichtung 17 ein oder mehrere Führungsabschnitte 17.2 aufweisen, welche eingerichtet sind, eine Bewegung des Sperrelements 17.1 in die erste und/oder zweite Ausrichtung und/oder Position zu führen. Durch entsprechende Führungsabschnitte 17.2 ist eine besonders exakte Überführung des Sperrelements 17.1 in jeweilige erste und/oder zweite Ausrichtung und/oder Positionen möglich.

Auch der Sperreinrichtung 17 kann eine lediglich in Fig. 1 schematisch angedeutete Antriebseinrichtung 18 zugeordnet sein, welche eingerichtet ist, eine das Sperrelement 17.1 in eine Bewegung in dem wenigstens einen Bewegungsfreiheitsgrad, vgl. den entsprechenden Doppelpfeil, versetzende Antriebskraft zu erzeugen. Die Antriebseinrichtung 18 dann daher mit dem Sperrelement 17.1 der Sperreinrichtung 17 koppelbar oder gekoppelt sein. Die Antriebseinrichtung 18 kann z. B. eine motorische bzw. elektromotorische, hydraulische oder pneumatische Antriebseinrichtung sein. Der Betrieb der Antriebseinrichtung 18 kann über die oder eine dieser zugeordnete hardware- und/oder softwaremäßig implementierte Steuereinrichtung 16 gesteuert sein. Die Steuereinrichtung 16 kann insbesondere eingerichtet sein, den Betrieb der Antriebseinrichtung 17 in Abhängigkeit des Betriebs der Stelleinrichtung 13 zu steuern. Weiter insbesondere kann die Steuereinrichtung 16 eingerichtet sein, den Betrieb der Antriebseinrichtung 17 mit dem Betrieb der Stelleinrichtung 13 zu synchronisieren. Dies kann z. B. bedeuten, dass das Sperrelement 17.1 in die Nicht-Sperrstellung bewegt wird, wenn das Stellelement 13.1 in die ausgefahrene Ausrichtung und/oder Position bewegt wird oder in die ausgefahrene Ausrichtung und/oder Position bewegt ist. Die Steuereinrichtung 16 der kann sonach jedenfalls mittelbar eingerichtet sein, den Betrieb der Antriebseinrichtung 18 in Abhängigkeit des Betriebs der Vorrichtung 100 zu steuern. Weiter insbesondere kann die Steuereinrichtung 16 eingerichtet sein, den Betrieb der Antriebseinrichtung 18 mit dem Betrieb der Vorrichtung 100, insbesondere im Zusammenhang mit der Durchführung von Spritzgieß- und/oder Flutprozessen, zu synchronisieren.

Aus vorstehenden Erläuterungen ergibt sich im Allgemeinen, dass die Einrichtung 10 wenigstens eine hardware- und/oder softwaremäßig implementierte Steuereinrichtung 16 umfassen kann, welche zur, insbesondere synchronisierten, Steuerung des Betriebs der der wenigstens einen Stelleinrichtung 13 zugeordneten Antriebseinrichtung 14 und/oder der der wenigstens einen Sperreinrichtung 17 zugeordneten Antriebseinrichtung 18 eingerichtet ist.

Mit den in den Fig. gezeigten Einrichtung 10 bzw. Vorrichtung 100 lässt sich ein Verfahren zum Betrieb einer Vorrichtung zur Herstellung eines Kunststoffbauteils, insbesondere eines zumindest abschnittsweise durch ein flutbares mehrkomponentiges Kunststoffmaterialgemisch hergestellten Kunststoffbauteils, implementieren, wobei im Rahmen des Verfahrens eine Einrichtung 10 ausgebildet und/oder verwendet wird, um ein in eine Formwerkzeugkavität 110 eines Formwerkzeugs 110 einbringbares bzw. einzubringendes Kunststoffmaterialgemisch in die Formwerkzeugkavität 111 des Formwerkzeugs 110 einzubringen.

## Patentansprüche

1. Einrichtung zum Einbringen eines, insbesondere im Zusammenhang mit einem Flutprozess, in eine Formwerkzeugkavität eines Formwerkzeugs einbringbaren bzw. einzubringenden mehrkomponentigen Kunststoffmaterialgemischs in eine Formwerkzeugkavität eines Formwerkzeugs, wobei die Einrichtung umfasst:
- wenigstens eine Zuführeinrichtung, welche eine sich zwischen einer Bereitstellungseinrichtung zur Bereitstellung eines, insbesondere im Zusammenhang mit einem Flutprozess, in eine Formwerkzeugkavität eines Formwerkzeugs einbringbaren bzw. einzubringenden mehrkomponentigen Kunststoffmaterialgemischs und einer Formwerkzeugkavität eines Formwerkzeugs, in welches das über die Bereitstellungseinrichtung bereitstellbare bzw. bereitgestellte Kunststoffmaterialgemisch einzubringen ist, erstreckende Zuführstrecke definiert;
- wenigstens eine Aufnahmekammer, welche wenigstens einen Aufnahmeraum zur Aufnahme von einem, insbesondere im Zusammenhang mit einem Flutprozess, in eine Formwerkzeugkavität eines Formwerkzeugs einbringbaren bzw. einzubringenden mehrkomponentigen Kunststoffmaterialgemisch umfasst;
- wenigstens eine der wenigstens einen Aufnahmekammer zugeordnete Stelleinrichtung, welche wenigstens ein in wenigstens einem Bewegungsfreiheitsgrad bewegbar gelagertes Stellelement umfasst, welches eingerichtet ist, durch eine Bewegung in dem wenigstens einen Bewegungsfreiheitsgrad in dem wenigstens einen Aufnahmeraum aufgenommenes Kunststoffmaterialgemisch aus dem wenigstens einen Aufnahmeraum in die oder in Richtung der Formwerkzeugkavität des Formwerkzeugs, in welches das Kunststoffmaterialgemisch einzubringen ist, zu bewegen.

2. Einrichtung nach Anspruch 1, wobei die wenigstens eine Zuführeinrichtung ein im Rahmen eines Spritzgießverfahrens ausgebildetes Bauteil ist.

3. Einrichtung nach Anspruch 1 oder 2, wobei die wenigstens eine Aufnahmekammer ein im Rahmen eines Spritzgießverfahrens ausgebildetes Bauteil ist.

4. Einrichtung nach Anspruch 2 und 3, wobei die wenigstens eine Zuführeinrichtung und die wenigstens eine Aufnahmekammer jeweils ein im Rahmen eines Spritzgießverfahrens gemeinsam ausgebildete Bauteile sind, insbesondere sind die wenigstens eine Zuführeinrichtung und die wenigstens eine Aufnahmekammer einstückig miteinander verbundene Bauteilabschnitte einer im Rahmen eines Spritzgießverfahrens einstückig ausgebildeten Bauteilstruktur.

5. Einrichtung nach einem der vorhergehenden Ansprüche, wobei die wenigstens eine Aufnahmekammer durch wenigstens einen, insbesondere kammerartigen bzw. -förmigen, Wandungsabschnitt eines Formwerkzeugs oder Formwerkzeugelements, insbesondere des Formwerkzeugs oder eines Formwerkzeugelements des Formwerkzeugs, in dessen Formwerkzeugkavität das Kunststoffmaterialgemisch vermittels der Einrichtung einzubringen ist, gebildet ist.

6. Einrichtung nach einem der vorhergehenden Ansprüche, wobei der wenigstens einen Stelleinrichtung wenigstens eine, insbesondere motorische, Antriebseinrichtung zugeordnet ist, welche eingerichtet ist, eine das wenigstens eine Stellelement in eine Bewegung in dem wenigstens einen Bewegungsfreiheitsgrad versetzende Antriebskraft zu erzeugen.

7. Einrichtung nach einem der vorhergehenden Ansprüche, ferner umfassend wenigstens eine Sperreinrichtung, welche ein in wenigstens einem Bewegungsfreiheitsgrad bewegbar gelagertes Sperrelement umfasst, wobei das wenigstens eine Sperrelement in wenigstens eine erste Ausrichtung und/oder Position bewegbar ist, in welcher es ein Einbringen eines Kunststoffmaterialgemischs in die wenigstens eine Formwerkzeugkavität des Formwerkzeugs sperrt, und in wenigstens eine zweite Ausrichtung und/oder Position bewegbar ist, in welcher es ein Einbringen eines Kunststoffmaterialgemischs in die wenigstens eine Formwerkzeugkavität des Formwerkzeugs nicht sperrt.

8. Einrichtung nach Anspruch 7, wobei die wenigstens eine Sperreinrichtung ein im Rahmen eines Spritzgießverfahrens ausgebildetes Bauteil ist.

9. Einrichtung nach Anspruch 7 oder 8, wobei die wenigstens eine Sperreinrichtung durch wenigstens einen, insbesondere schieberartigen bzw. - förmigen, Wandungsabschnitt eines Formwerkzeugs oder Formwerkzeugelements, insbesondere des Formwerkzeugs oder eines Formwerkzeugelements des Formwerkzeugs, in dessen Formwerkzeugkavität das Kunststoffmaterialgemisch vermittels der Einrichtung einzubringen ist, gebildet ist.

10. Einrichtung nach einem der Ansprüche 7 bis 9, wobei die wenigstens eine Sperreinrichtung ein oder mehrere Führungsabschnitte aufweist, welche eingerichtet sind, eine Bewegung des wenigstens einen Sperrelements in die erste und/oder zweite Ausrichtung und/oder Position zu führen.

11. Einrichtung nach einem der vorhergehenden Ansprüche, wobei der wenigstens einen Sperreinrichtung wenigstens eine, insbesondere motorische, Antriebseinrichtung zugeordnet ist, welche eingerichtet ist, eine das wenigstens eine Sperrelement in eine Bewegung in dem wenigstens einen Bewegungsfreiheitsgrad versetzende Antriebskraft zu erzeugen.

12. Einrichtung nach einem der vorhergehenden Ansprüche, ferner umfassend eine Steuereinrichtung, welche zur, insbesondere synchronisierten, Steuerung des Betriebs der der Stelleinrichtung und/oder der Sperreinrichtung zugeordneten Antriebseinrichtung eingerichtet ist.

13. Einrichtung nach einem der vorhergehenden Ansprüche, wobei die wenigstens eine Zuführstrecke durch wenigstens einen sich, insbesondere plattenartigen bzw. -förmigen, Zuführabschnitt gebildet ist oder einen solchen umfasst, wobei sich der wenigstens eine Zuführabschnitt mit einem ersten Bereich in Richtung einer Öffnung der wenigstens einen Aufnahmekammer erstreckt bzw. in die Öffnung der wenigstens einen Aufnahmekammer mündet, und mit einem zweiten Bereich ausgehend von der Öffnung der wenigstens einen Aufnahmekammer in Richtung der Formwerkzeugkavität des Formwerkzeugs erstreckt.

14. Einrichtung nach Anspruch 13, wobei der erste Zuführstreckenabschnitt der wenigstens einen Bereitstellungseinrichtung zugeordnet ist, und der wenigstens eine zweite Zuführstreckenabschnitt dem wenigstens einen Formwerkzeug, in dessen Formwerkzeugkavität das Kunststoffmaterialgemisch einzubringen ist, zugeordnet ist, wobei die wenigstens eine Aufnahmekammer zwischen dem ersten Zuführstreckenabschnitt und dem wenigstens einen zweiten Zuführstreckenabschnitt angeordnet oder ausgebildet ist.

15. Vorrichtung zur Herstellung eines Kunststoffbauteils, insbesondere eines zumindest abschnittsweise durch ein mehrkomponentiges Kunststoffmaterialgemisch hergestellten Kunststoffbauteils, wobei die Vorrichtung umfasst:
- wenigstens ein wenigstens eine Formwerkzeugkavität aufweisendes Formwerkzeug,
- wenigstens eine Bereitstellungseinrichtung, insbesondere eine Mischkopfeinrichtung, welche zur Bereitstellung eines, insbesondere im Zusammenhang mit einem Flutprozess, in eine Formwerkzeugkavität eines Formwerkzeugs einbringbaren bzw. einzubringenden mehrkomponentigen Kunststoffmaterialgemischs bereitzustellen, und
- wenigstens eine Einrichtung nach einem der vorhergehenden Ansprüche.
